# EUROPEAN PATENT APPLICATION

(11) **EP 3 113 440 A1**
(43) Date of publication of application: **04.01.2017**
(21) Application number: 15306069.4
(22) Date of filing: 01.07.2015
(51) Int. Cl.: H04L 29/06

(54) **SELF-MANAGED NETWORK SECURITY MEASURES**

(71) Applicant: Orange, 75015 Paris (FR)
(72) Inventor: AUDSIN, Dev Pramil, Londres, SE12 9TA (GB); AHMAD, Zaheer, Londres, UB12UN (GB)
(74) Representative: Cabinet Plasseraud

(57) **Abstract**

A server for providing security for a computer network via a network switch, the server being configured to:
receive rules for filtering network data traffic that is received at the switch, wherein the rules relate to at least two network security technologies;
apply the rules at the network switch;
receive information from the network switch indicating details of network data traffic received at the switch;
determine, from a comparison of the rules applied at the network switch under one of the network security technologies with information received from the network switch in relation to another of the network security technologies, whether a data leakage has occurred; and
add a new rule to the existing rules for filtering network data traffic to prevent a reoccurrence of the data leakage.

## Description

### Background

### Technical field

The present invention relates to network security management, and in particular to the management of network security in a cloud-computing environment. More particularly still, the invention relates to network security in which two or more different network security technologies are employed together.

### Related art

The management of network security is an increasingly important issue since many companies, governments and individuals are increasingly storing their data in a networked computing environment. Thus, providing access to such data to only desired entities is of paramount importance.

In traditional computer network technologies, data processing and data storage facilities are either present in a user's local machine, or are provided via a network, such as a local area network. Typically, this network is formed using physical connections, such as Ethernet cabling, that exists to connect computers in the network.

In a computer network that is limited to a particular physical location, such as a home or single office building, limiting access to the network can often be accomplished by providing access only to computers that have a known identity. For example, network security measures can involve only allowing access to computers having an IP address or GUID that is present on a list of approved devices. Alternatively or additionally, within the environment of an office building, by limiting connections to only those devices that are physically present within the given location, management of network access can be made secure relatively easily. This principle can be extended to environments encompassing multiple locations if a dedicated and secure network can be constructed to connect the locations.

Cloud computing is a term that is used to describe the provision of computing services, such as processing and data storage, via the internet. In a cloud-computing environment, the actual identity and physical location of devices accessing the network will in general not be known, since devices can access cloud networks via the internet. In addition, for reasons of practicality, users may wish to access a cloud network using devices that have not previously been 'registered' for use with the network, and so the identity of devices that can legitimately use the network may not be known. Thus, the provision of network security in a cloud-based network presents considerable difficulties.

Network gateways are a natural path into information systems, and to they also constitute a natural policy enforcement point in cloud networks. As a result, current network security systems for cloud computing employ various technologies at network gateways, such as packet filtering, network access control and network usage control.

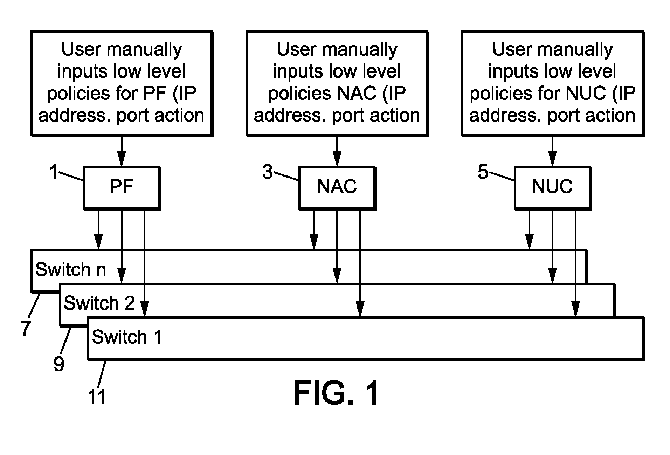

Figure 1 illustrates a typical architecture for applying network security in a cloud computing system according to a known method. The architecture includes Packet Filtering (PF) 1, Network Access Control (NAC) 3 and Network Usage Control (NUC) 5. As illustrated in figure 1 a user, for example a network security manager (administrator), manually applies low-level policies to each of the PF 1, NAC 3 and NUC 5. In each case, an IP address and/or port and action to be taken will be specified by the user. Each of the PF 1, NAC, 3 and NUC 5 are in communication with network switches 7, 9, 11 so that the specified network control for the network security can be implemented.

PF is a technology which is able to inspect and modify packet content (when in readable form). The current challenge of PF lies in the implementation of new protocols, which the filter must be able to understand in order to successfully filter packets of data.

NAC is a term that is used to describe the means by which a device receives an address, such as source or destination address of a packet. The prevailing technology to achieve NAC is Dynamic Host Configuration Protocol (DHCP), in which a device wishing to connect to the network receives an address to enable the connection.

NUC, for example Multi-Protocol Label Switching (MPLS), is a technology that enables network operators to build virtual private networks that include service guarantees described in service level agreements. For example, MPLS can be used as a security mechanism for usage control to enable throttling or "black holing" of malicious traffic whenever needed. MPLS can also be used in situations encompassing multi-providers.

However, whilst each of the above described technologies can be applied together in a security system for a cloud computing system, there is currently no means by which they can be configured together. Rather, current systems require that each technology is configured individually to achieve the desired control over security of access. As a result, there is in general no way of improving security by allowing the different technologies employed to interact. Moreover, when two or more different technologies are involved, it become complex for a user to implement a desired policy since they must manually derive the necessary policies to implement under each technology.

It is an aim of the present invention to solve or mitigate at least some of the above-described problems.

### Summary

In a first aspect, there is provided a server for providing security for a computer network via a network switch, the server being configured to:
receive rules for filtering network data traffic that is received at the switch, wherein the rules relate to at least two network security technologies;
apply the rules at the network switch;
receive information from the network switch indicating details of network data traffic received at the switch;
determine, from a comparison of the rules applied at the network switch under one of the network security technologies with information received from the network switch in relation to another of the network security technologies, whether a data leakage has occurred; and
add a new rule to the existing rules for filtering network data traffic to prevent a reoccurrence of the data leakage.

Thus, advantageously, the server can automatically detect data leakage and update the rules for filtering network traffic to prevent further leakage via the same route.

In some embodiments, the network security technologies comprise one or more instances of one or more of Packet Filtering, PF, Network Access Control, NAC or Network Usage Control, NUC. Thus, the server can form a combination of known security technologies to provide a robust security system.

In some embodiments, the rules for filtering network data traffic comprise one or more PF rules, one or more NAC rules or one or more NUC rules. Thus, advantageously, the rules can be expressed as simple Boolean rules as employed in known technology. This can enable the automatic comparison of the rules with statistics of data traffic at a network switch since the rules and the statistics are directly comparable.

In some embodiments, the server further comprises an orchestrator, the orchestrator comprising means to receive declarative policies for network security and to derive the rules for filtering network data traffic from the declarative policies. Thus, advantageously, the orchestrator can allow a user, such as the network administrator, to input rules in a declarative form, such as in the form of a set of desired outcomes from the network security. Such declarative statements are easier for a user to understand than a large set of Boolean rules.

In some embodiments, the orchestrator is configured to receive declarative policies in the form of a Finite State Machine, FSM and the derivation of the rules is achieved by decomposing the FSM to form a set of rules comprising Boolean expressions.

In some embodiments, the information received from the network switch comprises information of the flow of data packets at the switch including one or more of a packet header, a source IP address, a destination IP address, a port ID.

In some embodiments the determination of whether a data leakage has occurred is made by comparing the FSM of the rules applied at the network switch with an FSM derived from the information received from the network switch. Thus, advantageously, states in the FSM derived from the information received from the network switch that occurred, but that were undesired, can easily be detected.

In some embodiments, the comparison includes projecting a difference between the FSM of the rules applied at the network switch and the FSM derived from the information received from the network switch into an FSM trace model. Thus, advantageously, the projected trace can be used to easily identify the undesired data leakage.

In some embodiments, the addition of the new rule comprises providing a rule to block the trace projected into the trace model. Thus, advantageously, there is provided an easy means by which new rules can be derived to achieve a desired result.

In some embodiments, the server is further configured to apply rules at, and receive information from, a plurality of network switches. Thus, advantageously, a single server can control a network having a plurality of switches.

In some embodiments, the comparison of the rules with data received from the network switch includes a local comparison of data and rules at each of the network switches, and also a global comparison of the combination of rules for all of the network switches with a combination of the information received from all of the switches. Thus, advantageously, there is provided a means by which both data leakage at a single switch and data leakage that occurs as a result of the presence of more than one switch can both be detected.

In a second aspect, there is provided a method for providing security for a computer network via a network switch, the method comprising:
receiving rules for filtering network data traffic that is received at the switch, wherein the rules relate to at least two network security technologies;
applying the rules at the network switch;
receiving information from the network switch indicating details of network data traffic received at the switch;
determining, from a comparison of the rules applied at the network switch under one of the network security technologies with information received from the network switch in relation to another of the network security technologies, whether a data leakage has occurred; and
adding a new rule to the existing rules for filtering network data traffic to prevent a reoccurrence of the data leakage.

In further aspects there is provided a computer program product comprising computer readable instructions which, when implemented on a processor perform all of the steps of the method of any of the second or third aspects, and a computer readable medium comprising such a computer program.

### Brief description of the drawings

The invention will now be described with reference to the accompanying Figures of which:
Figure 1 illustrates an architecture for applying a security policy according to a known method;
Figure 2 illustrates an architecture according for applying a security policy according to an embodiment of the invention; and
Figure 3 illustrates a flow chart for a method according to the embodiment of Figure 2.

### Detailed Description

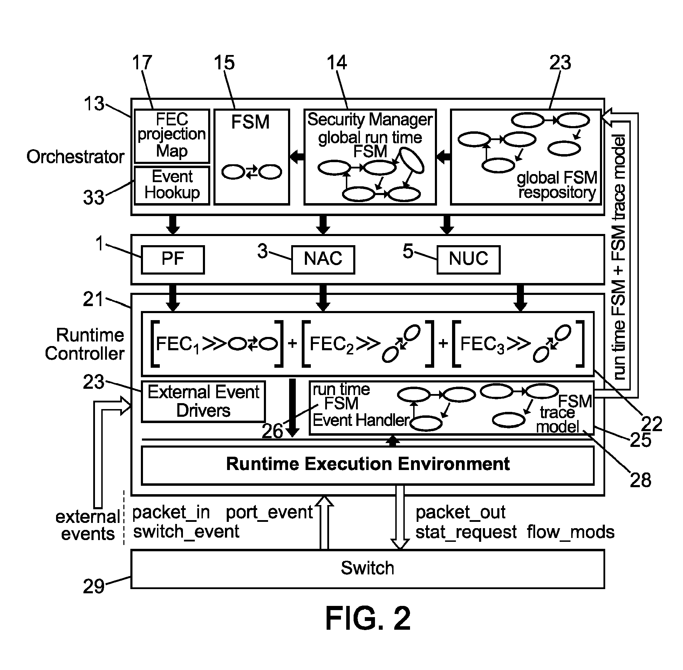

Figure 2 illustrates an architecture for applying a method according to an embodiment of the invention. As illustrated, various technologies can be used to implement network security and figure 2 illustrates the use of PF 1, NAC 3 and NUC 5, as per the known architecture of figure 1. However, other network security measures can also be present, and the skilled person will recognise that there can be more or less than three different network security measures present and that three are illustrated here for example purposes only. Moreover, more than one instance of each technology can be applied in a given security system. Thus, for example, there can be multiple PFs implemented.

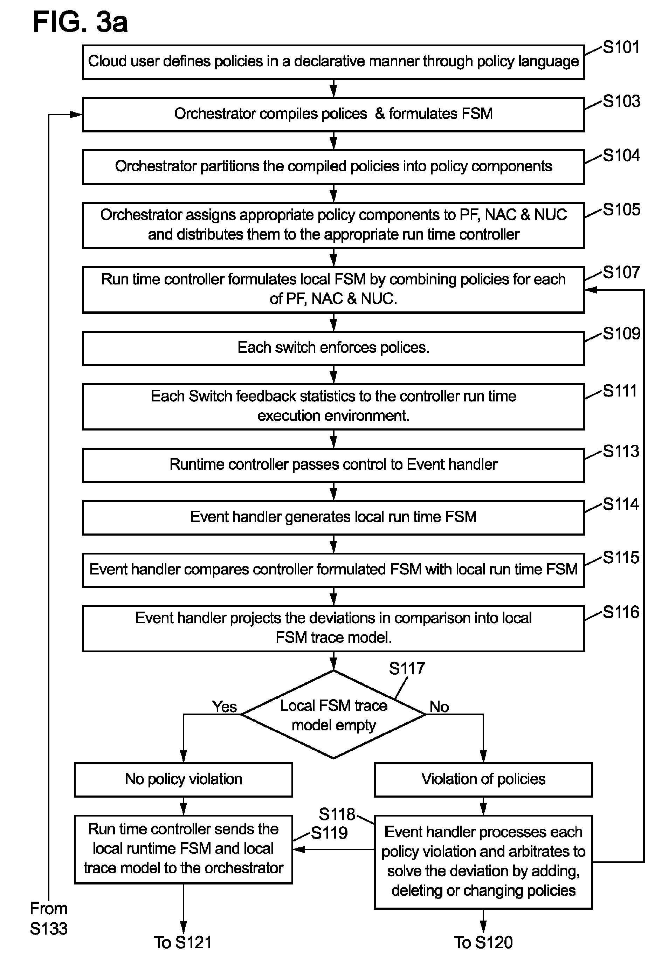

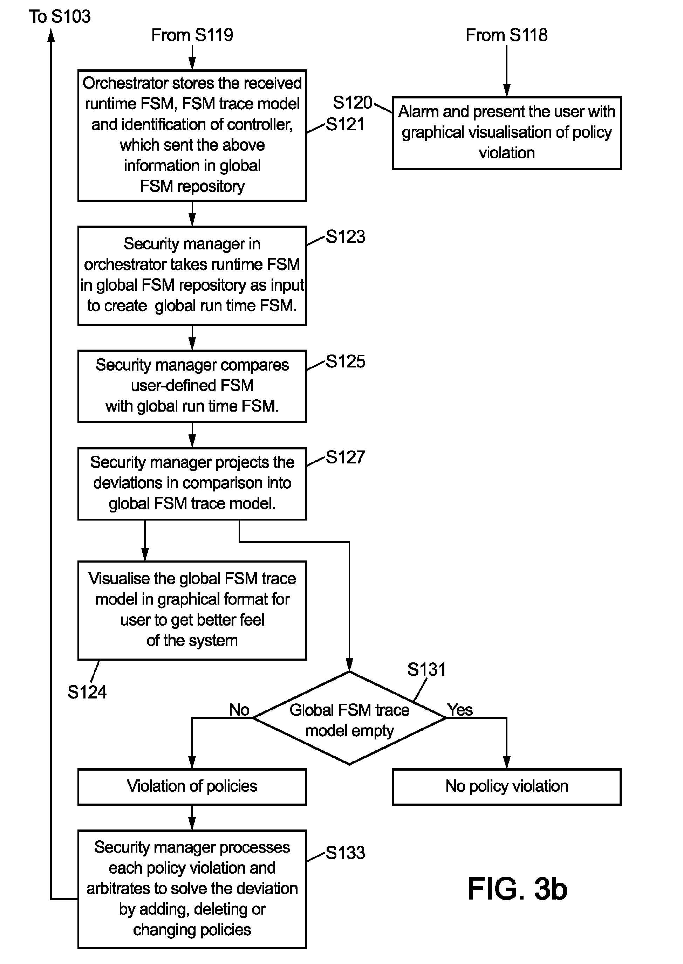

Providing inputs to the PF 1, NAC 3 and NUC 5 is an orchestrator 13. The orchestrator 13 comprises a finite state machine (FSM) specification 15, a security manager 19, an event hookup 33, a global FSM repository 31 and a Forwarding Equivalence Class (FEC) projection map 17. The orchestrator 13 has four functions: Policy language, compilation, partition and distribution. These functions will be explained in further detail below in relation to figure 3.

In its simplest form, the FSM specification 15 comprises a table of inputs and corresponding actions. Thus, for example, this could take the form of a list of possible IP addresses from which access requests can be received. For each IP address there is a corresponding action to be taken, such as to either allow or block access.

The FEC projection map 17 can take the form of a set of instructions that allows packets of data that are received with similar (or identical) parameters to be treated in the same manner. Thus, a label provided with a packet of data can be identified in the FEC projection map 17 and a corresponding instruction for packets having that label can then be followed. Thus, the FEC projection map 17 could include a destination address and/or port for packets having a given label.

The security manager 19 is a processing resource that can convert multiple runtime FSMs (for example one rumtime FSM for each different switch in a cloud network) into a global runtime FSM, and also generate FSM trace models from comparisons of different FSMs. Here, a runtime FSM is defined as a FSM that is capable of being executed in a runtime environment, and an FSM trace model is defined as the set of all possible sequences described in the FSM. These terms will be explained in greater detail with reference to figure 3.

The global FSM repository 31 stores the global runtime FSM for the system controlled by the orchestrator 13. The global runtime FSM repository 31 can also receive information from the event handler 25 for the purpose of comparing a runtime FSM with that originally specified by the user. This process will be described in greater detail with reference to figure 3. Also illustrated is an event hookup 33, this is optional and is used in the event that multiple orchestrators 13 are present in a cloud network.

The orchestrator 13 is configured to receive two arguments, an FSM description and an FEC projection map. A user, typically the cloud network administrator (e.g. a network manager), will specify network policies in a declarative manner as the FSM. These network policies will in general mix elements from one or more different network security elements (as described above) that are supported by the architecture. The process of specifying the policies will be explained in greater detail below with reference to figure 3.

The policies specified in the Orchestrator 13 are passed from the orchestrator 13 to the various technologies employed for network security (i.e. the PF 1, NAC 3 and NUC 5). The policies are then implemented via a runtime controller 21. The runtime controller 21 receives each of the policies derived in the PF 1, the NAC 3 and the NUC 5 and applies them in a serial manner. The process of applying the policies will be described in greater detail below with reference to figure 3.

The runtime controller 21 comprises means 22 to combine the policies from each of the technologies present in the architecture (PF 1, NAC 3 and NUC 5) into a set of policies for the network element that it is controlling, such as one or more switches or virtual switches 29. The runtime controller also comprises an event handler 25 and external event drivers 23. The external event drivers 23 are components and methods that are configured to capture events that originate from components outside of the system illustrated in Figure 2. For instance, events from an intrusion detection system can be input to the system through the external event drivers 23.

The event handler 25 comprises a local FSM trace model 28, which contains traces for the FSM applicable to the runtime controller 21 and the corresponding local runtime FSM 26. Thus, the global FSM 15 is applicable to the whole of the cloud network, that is controlled by the orchestrator 13, while the local FSM is applicable to only the switch 29 or switches that are controlled by the particular runtime controller 21 illustrated. The function of the event handler 25 will be described below in relation to figure 3. The runtime controller 21 is executed in a runtime execution environment.

As noted above, the runtime controller 21 is configured to control the operation of one or more switches 29 (or virtual switches). To achieve this control, the runtime controller 21 is configured to exchange various messages with the switch 29. Examples of messages that can be exchanged include port_events, packet_ins, packet_out and stat_requests.

Port_events are events wherein a switch 29 receives and/or sends packets on ports. The switch may define physical and/or virtual ports. Examples of port_events include: current port bitrate in kbps and the state of the port, namely port up / down.

A packet_in message is used when packets are received by the switch 29 and sent to the runtime controller 21. Conversely, a packet_out message is used when the runtime controller 21 wishes to send a packet out through the switch 29.

Stat_requests messages are used to query the switch 29. Thus, while the system is running, the switch 29 may be queried about its current state and statistics, such as flow statistics, aggregate flow statistics and flow table statistics using a stat_requests message. These statistics can be passed from the switch 29 to the event handler 25 to provide feedback to allow update of the runtime FSM 26.

Thus, the architecture of figure 2 provides a means by which a user, such as a cloud network administrator, can enact declarative policies for network security on a network switch by inputting a declarative policy in the form of a FSM 15. The declarative policy will then be split and sent to the technology (PF 1, NAC 3 or NUC 5) to which it relates, and then ultimately applied at one or more switches 29. In turn, the switches 29 will feedback data concerning traffic at the switches and this data can be used by the architecture to modify the declarative policy to achieve a desired data flow. Specific details of how this is achieved will now be explained with reference to figure 3.

Figure 3 illustrates a flow chart of a method according to the embodiment illustrated in figure 2. A user, such as a system administrator for the cloud network, defines global network policies S101 for the network security in a declarative manner, in other words the user specifies a policy in terms of a desired outcome, instead of by specifying exactly how the outcome is achieved. This is achieved using the policy language that is supported by the orchestrator 13.

For example, a declarative policy for implementation by the PF 1 could be that all data flow that arrives from the internet and that is destined to access a certain database in a cloud computing environment should be dropped (or blocked). A further example could be that the user can define lists of IP addresses that are considered as belonging to legitimate users of the network, or part thereof. In addition other policies, such as geographical locations of known IP addresses, can also be defined.

An example of a declarative policy for implementation by the NAC 3 is the process of web-based authentication for access to a web server. In such an authentication, the declarative policy can be to specify usernames and corresponding passwords that should be granted access. A further example would be a policy that allows access to the web server if the flow is of a certain type, such as from a corporate network rather than the internet, or that allows flow from certain types of machines, e.g. mobile devices rather than static devices.

An example of a declarative policy for implementation by the NUC 5 could relate to the bandwidth of a given data flow. Such as specifying that a data flow above 100MB/s should be throttled to 5MB/s

By enabling high-level declarative policies to be used rather than imperative policies, in which each step in the policy must be explicitly specified by the user, the system of the present invention can greatly simplify the task of managing network security in a cloud-based environment.

On the basis of the defined policies, a compiler in the orchestrator 13 compiles the policies and generates a global FSM 15 representing the policies S103. This user-defined global FSM 15 is stored in a global FSM repository 31 within the orchestrator 13, for later use. The compiler in the orchestrator 13 then partitions S104 the policies into policy components

The skilled person will recognise that this can be achieved by breaking down each of the high-level declarative policies into a series of lower-level conditional statements, in other words effectively statements of the form IF (x) THEN (Y). The skilled person will recognise how to achieve this process, and so further explanation will be omitted here.

The orchestrator 13 has a global view of the network that it is controlling, since it controls all network security, and receives statistics from all of the network switches and virtual switches. As a result, the orchestrator 13 is able to assign S105 each of the low-level policies that form the FSM 15 to the correct network security element, i.e. either PF1, NAC 3 or NUC 5, or other technology present.

Subsequent to step S105, a runtime controller 21 then receives the low-level policies from the orchestrator 13, and combines S107 the policies from each of the technologies present in the architecture into a set of policies for the network element that it is controlling, such as a switch or virtual switch 29. The skilled person will recognise that there will typically be one runtime controller 21 for each switch or virtual switch 29, or one runtime controller 21 controlling a few switches/virtual switches 29. Thus, in a typical cloud network, there will be many switches/virtual switches 29 and many runtime controllers 21. However for the purpose of this explanation, only one such virtual switch 29 and runtime controller 21 will be described here. For the purposes of explanation of the embodiment, the term switch will be used to encompass either or both of a physical switch or a virtual switch. The runtime controller 21 formulates the local FSM by combining policies for each of the PF 1, the NAC 3 and the NUC 5.

Subsequently, the (or each) switch 29, can act to enforce S109 the applied low-level policies on network traffic that is routed through that switch 29. The skilled person will recognise that, typically this is achieved using a low-level flow table in the switch 29. This can take the form of rules such as either sending or dropping packets on the basis of the IF (x) THEN (Y) as formulated for a flow-table. The skilled person will recognise how to implement such a flow-table in a switch 29 and so further explanation will be omitted.

As described above network elements such as switches and virtual switches can be configured to maintain statistics regarding data packets passing through the switch 29. Such statistics can, for example, include the number of packets through the switch in a given time, the data rate for a given period and the origins and/or destinations of packets in a given period. Thus, in the present invention, the switch(es) 29 are configured to collect such statistics and feed them back S111 to the respective runtime controller 21.

The runtime controller 21 then passes S113 control to the event handler 25 by passing the received statistics to the event handler 25. The event handler 25 is used to determine whether any data leakage has occurred by analysing the received statistics. The term data leakage is used to define a situation in which data packets that should have been dealt with on one manner were actually dealt with in a different manner. Thus, for example, if a declarative policy was set to drop packets received from a given location, but those packets were actually passed through the system, then this would amount to data leakage. As described here, the term policy violation can also be used as a synonym for data leakage, since the correct flow of data is determined by the policies set in the orchestrator 13. Thus any data leakage is in effect a violation of one of the policies set.

In the architecture of figure 2, there are a number of ways in which data leakage can occur. However, there are two general types of data leakage; "local" data leakage that occurs due to a problem with policies applied at a particular switch 29 or runtime controller 21; and "global" data leakage, that occurs due to problems between policies applied at different switches or runtime controllers.

To give an example of a data leakage that can occur locally at a switch 29, suppose the login credentials (e.g. username and password) of a legitimate user of the cloud network, who is based within a corporate network were stolen and used by an external user via the internet. To allow the user legitimate access, a declarative policy permitting access for the username and password could initially be set in the NAC 3. However, if access under the username was actually made from an external location via the internet, then ideally this access should have been blocked, since it is known that the legitimate user is based within a corporate network. However, since the PF 1 and the NAC 3 on their own cannot have a view of all of the policies applied at the switch 29 on which they operate, the declarative policies initially set could not have prevented the undesired access.

In contrast, by looking at a all policies set on the switch 29 in the PF, NAC and NUC and comparing the policies with the statistics of the data flow, the event handler 25 can determine whether a data leakage has occurred. Thus, in the example given above, the statistics received by the event handler 25 from the NAC 3 will include details of packets that were transferred in respect of a connection by the user identified by the username (that has been stolen). In addition, the statistics received by the event handler 25 from the PF 1 will indicate that data flow in respect of this connection originated from the internet, rather than the corporate network as expected. Thus, the event handler can signal an alarm that data leakage has occurred.

To give a further example in which data leakage can occur in a more global nature, suppose a cloud network is hosting a website, and the website is allowed a certain bandwidth for access to the website from the internet. In a typical cloud network, access from the internet could arrive via different routes, such as via one of a plurality of different switches 29. Whilst a bandwidth limit could be set in each route, there is no currently no realistic method of determining the overall bandwidth used via all possible routes. For example, if a plurality of switches 29 are present, then each switch 29 will not know what bandwidth has been handled by the other switches 29. However, using the system of the present invention, the event handler 25 receives statistics from each route or switch 29, and can easily determine the total bandwidth consumed over a given period. In then event that an overall bandwidth limit is exceeded, the event handler 25 can signal an alarm that data leakage has occurred.

The skilled person will recognise that many other forms of data leakage can be detected by looking at statistics received from one or more switches 29 in a cloud network, and the present invention is not limited to the examples provided here.

The process of determining whether a data leakage has occurred at a local level is achieved by the event handler 25. This generates S 114 the local runtime FSM 26 for the switch 29. This is effectively an FSM indicating all paths that have actually been used at the switch 29. This local runtime FSM 26 is then compared S115 by the event handler 25 with the formulated FSM from step S107, this involves a pair-wise comparison of statements and checking for the resulting path inclusions due to execution of the policy statements. In other words, allowed paths from the FSM of step S107 are compared with all of the paths used in the FSM of step S 114. Any differences between the two FSM are then projected S116 in to the local FSM trace model 28. In other words, a trace that is possible in one FSM but not the other will be projected into the local FSM trace model 28.

Thus, if the local FSM trace model 28 generated in step S116 is empty, then no policy violations have been detected. Conversely, the presence of any deviations projected into the local FSM trace model 28 indicates the presence of one or more policy violations, this is tested in step S 117.

If the event handler 25 does detect a policy violation, i.e. if the local FSM trace model 28 is not empty, then the event handler 25 can process S118 each policy violation (i.e. each trace) detected and arbitrates to solve the violation by adding, deleting and/or changing policies as necessary.

For example, the runtime controller 21 can be provided with a record of all the locations, devices and patterns of a user accessing the service. If any anomaly is detected in this use pattern, for example the access is from an unknown location or the location which the user does not usually access the service from or the user is accessing the service outside of the corporate network, the security manager solves the deviation by adding a policy to drop the packets. The skilled person will understand how to generate such changes to the applied policies, and so further explanation will not be provided here.

Optionally, an alarm can be provided S120 to the user to indicate that a policy violation has been detected. The alarm can include details of the policy violation. The skilled person will recognise that there are many ways in which such an alarm can be effected, and so further details will not be provided here.

The updated policies are then provided to the runtime controller 21, and the method re-commences from step S107 to enable the new policies to be applied. This repetition of the method provides a feedback loop which allows periodic detection of data leaks and thus periodic updates to the policies to correct the leaks at local level.

If the event handler 25 does not detect a policy violation during a particular time period over which the statistics are analysed, then the runtime controller 21 can optionally send S 119 the local runtime FSM 26 and the local FSM trace model 28 to the orchestrator 13. The Orchestrator 13 then stores S121 the received local runtime FSM 26 and local FSM trace model 28, together with an identification of the runtime controller 21 which sent the information in the global FSM repository 31.

The security manager 19 then takes the (or all of the) local runtime FSM(s) received from the runtime controller(s) 21 in the system and combines them to generate S123 a global runtime FSM. Subsequently, the security manager 19 compares S125 the user-defined FSM from step S103, stored in the global FSM repository 31, with the global runtime FSM generated in S123. In a process equivalent to that of S116, the security manager 19 then projects any difference between the two FSMs into a global FSM trace model. The global FSM trace model from S127 can, optionally, be provided S129 in visual form so that a user can get a feel for how the system is functioning.

In a step equivalent to that of S 117, the presence of any policy violations is tested by determining whether the global FSM trace model from S127 is empty. If the global FSM trace model is empty, then no policy violation has been detected. In such an instance, there is no need to update any policy applied, and so the system can simply continue to enforce the policies implemented at the switch 29 as per step S109. The skilled person will recognise that the process of detecting policy violations can be repeated at a later time to detect policy violations that occur later. In this case, the steps of the method from S109 onwards will be repeated as described above.

If it is determined in step S131 that the global FSM trace model is not empty, then a policy violation has been detected. In this situation, and in a manner corresponding to that applied in step S118, the security manager 19 processes S133 each policy violation detected and arbitrates to solve the violation by adding, deleting and/or changing policies as necessary.

For example, the security manager 19 can be provided with a record of all the locations, devices and patterns of a user accessing the service. If any anomaly is detected in this use pattern, for example the access is from an unknown location or the location which the user does not usually access the service from or the user is accessing the service outside of the corporate network, the security manager solves the deviation by adding a policy to drop the packets. The skilled person will understand how to generate such changes to the applied policies, and so further explanation will not be provided here.

The details of this process will be explained below. Optionally, an alarm can be provided to the user to indicate that a policy violation has been detected. The alarm can include details of the policy violation. The skilled person will recognise that there are many ways in which such an alarm can be effected, and so further details will not be provided here.

The updated policies are then provided to the orchestrator 13, and the method re-commences from step S 103 to enable the new policies to be applied globally to the system. This repetition of the method provides a feedback loop which allows periodic detection of data leaks and thus periodic updates to the policies to correct the leaks at global level.

Thus, from the above description, the skilled person will recognise that "local" data leakages are detected in step S118, while "global" data leakages are detected in steps S119, S121, S123, S125, S127, S129 S131 and S133. An advantage of searching for both local and global data leakages is that it can simplify the overall problem. By first searching for local data leakages, the orchestrator can easily determine rules that correct these data leakages. Should any global data leakages remain after correction of the local leakages, then these can be corrected at the global level. Conversely, if the orchestrator had only searched for leakages at a global level, then it would be a more complex task to derive rules that correct local data leakages at a global level since the switch at which to apply any new rules would not be directly identified.

To use the example of stolen user credentials given above, the new policy could be to block packets from the internet related to those user credentials. Similarly, in the example of excess bandwidth consumption, the new policy could be to block or limit the bandwidth for that website via some or all of the switches 29. The skilled person will recognise that there will in general be many different ways in which a particular policy violation can be blocked, and so the present invention is not limited to the examples as provided here.

The process described above can be repeated many times, and typically will repeated at periodic intervals. The skilled person will recognise that, in a dynamic environment such as a cloud network, the policies that need to be applied will change on an ongoing basis. Thus, the process can additionally be repeated starting from the beginning (step S101) as and when updates to the policies are required.

Thus, the method of the present invention provides a means by which the network security can be repeatedly updated and enhanced. Moreover, by initially allowing data flow using one set of declarative policies, and subsequently blocking any policy violations that are detected the security of the cloud network can be made highly robust without requiring the network administrator to apply complicated security measures.

The skilled person will recognise that, in the event that only a single runtime controller 21 is present in a cloud network, then "local" and "global" data leakages are effectively the same. Thus, in such a network, steps S 119, S121, S123, S125, S127, S129, S131 and S133 can be omitted.

In addition, the method of the present invention permits the network security to be updated and enhanced as new issues occur, such as a deliberate attack from a malicious party. Since the feedback loop allows policy violations to be detected and corrected automatically, the security update can be made with little or no direct input from the network administrator.

To give an example of how a declarative policy can be input in step S101, the example provided above of a declarative policy for implementation by the NUC 5 will be used. This related to the bandwidth of a given data flow, and stipulated that a data flow above 100MB/s should be throttled to 5MB/s. This statement specifies the high level declarative policy as specified by the user.

An instance of "a given data flow" could be a data flow from any client on the Internet to the Data Base (DB) hosted on the cloud. The corresponding compiler-generated low-level global policy at the orchestrator could take the form of:
foreach
if (ipSrc = * and ipDst = DB and (statistics > 100 MB/s))
then (max(5MB/s))
@S1 & S2 & S3

Here:
"*" is a wild card character and refers to "any" in the high level policy,
"@" refers to the enforcement point. In the above expression, and
"statistics" refers to the bandwidth data rate provided by switches S1, S2 and S3.

If, in the example, we assume there are two runtime controllers, C1 and C2 and that switches S1 and S2 are controlled by C1 whilst S3 is controlled by C2. The global policy will then be partitioned, assigned to NUC and distributed to C1 and to C2.

In this example, the partitioned policy distributed to C1 could take the form of:
foreach
if (ipSrc = * and ipDst = DB and (statistics > 100 MB/s))
then (max (5MB/s))
@ S1 & S2

Here:
"ipSrc" denotes the IP address of the source device, and
"ipDst" denotes the IP address of the destination device.

The partitioned policy distributed to C2 could take the form of:
foreach
if (ipSrc = * and ipDst = DB and (statistics > 100 MB/s))
then (max(5MB/s))
@ S3

On receipt of these policies, C1 and C2 further refine their respective policies for a fine-grained enforcement at each switch under the control of the particular controller. Thus, for instance, C1 can further partition the policy as follows:
foreach
if (ipSrc = * and ipDst = DB and (statistics > 100 MB/s))
then (max(5MB/s))
@ S1

foreach
(ipSrc = * and ipDst = DB and (statistics > 100 MB/s))
then (max(5MB/s))
@S2

These policies are then distributed to each of the switches controlled by C1, which then convert the policies into machine specific enforceable policies. Thus if, for example, the switch runs the Linux Operating system, then the machine dependant enforceable policies could be in the form of code for iptables or netfilter. The skilled person will be familiar with these terms and so further description of them will not be provided here. The skilled person will also recognise that other operating system can equally be used to operate the switch and other components of the system.

In alternative embodiments, there can be a plurality of orchestrators 13 that are used to control a particular cloud network, and in such embodiments each orchestrator 13 is additionally provided with the event hookup 33 as described in relation to figure 2. The event hookup 33 acts to provide each orchestrator 13 with information of the policies set in every other orchestrator 13. Thus, each of the pluralities of orchestrators can have a global view of the cloud network, and the above described advantages can be retained even in the presence of multiple orchestrators 13.

The skilled person will recognise that the methods and architecture described here can equally be applied to computer networks other than cloud networks. Thus, whilst the description makes reference to cloud networks, the invention can equally be applied to other computer networks, such as corporate networks, local area networks (LANs) and wide area networks (WANs).

As mentioned above, embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A server for providing security for a computer network via a network switch, the server being configured to:
receive rules for filtering network data traffic that is received at the switch, wherein the rules relate to at least two network security technologies;
apply the rules at the network switch;
receive information from the network switch indicating details of network data traffic received at the switch;
determine, from a comparison of the rules applied at the network switch under one of the network security technologies with information received from the network switch in relation to another of the network security technologies, whether a data leakage has occurred; and
add a new rule to the existing rules for filtering network data traffic to prevent a reoccurrence of the data leakage.

2. A server according to claim 1 wherein the network security technologies comprise one or more instances of one or more of Packet Filtering, PF, Network Access Control, NAC or Network Usage Control, NUC.

3. A server according to claim 2, wherein the rules for filtering network data traffic comprise one or more PF rules, one or more NAC rules or one or more NUC rules.

4. A server according to any preceding claim, further comprising an orchestrator, the orchestrator comprising means to receive declarative policies for network security and to derive the rules for filtering network data traffic from the declarative policies.

5. A server according to claim 4, wherein the orchestrator is configured to receive declarative policies in the form of a Finite State Machine, FSM and the derivation of the rules is achieved by decomposing the FSM to form a set of rules comprising Boolean expressions.

6. A server according to any preceding claim, wherein the information received from the network switch comprises information of the flow of data packets at the switch including one or more of a packet header, a source IP address, a destination IP address, a port ID.

7. A server according to claim 5, wherein the determination of whether a data leakage has occurred is made by comparing the FSM of the rules applied at the network switch with an FSM derived from the information received from the network switch.

8. A server according to claim 7 wherein the comparison includes projecting a difference between the FSM of the rules applied at the network switch and the FSM derived from the information received from the network switch into an FSM trace model.

9. A server according to claim 8, wherein the addition of the new rule comprises providing a rule to block the trace projected into the trace model.

10. A server according to any preceding claim, further configured to apply rules at, and receive information from, a plurality of network switches.

11. The server according to claim 7, wherein the comparison of the rules with data received from the network switch includes a local comparison of data and rules at each of the network switches, and also a global comparison of the combination of rules for all of the network switches with a combination of the information received from all of the switches.

12. A method for providing security for a computer network via a network switch, the method comprising:
receiving rules for filtering network data traffic that is received at the switch, wherein the rules relate to at least two network security technologies;
applying the rules at the network switch;
receiving information from the network switch indicating details of network data traffic received at the switch;
determining, from a comparison of the rules applied at the network switch under one of the network security technologies with information received from the network switch in relation to another of the network security technologies, whether a data leakage has occurred; and
adding a new rule to the existing rules for filtering network data traffic to prevent a reoccurrence of the data leakage.

13. A computer program product comprising computer readable instructions which, when run on a computer system, cause the computer system to perform the method of claim 12.

14. A computer readable medium comprising the computer program product according to claim 13.
